(19) Europäisches Patentamt / European Patent Office / Office européen des brevets

(11) **EP 3 124 917 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(51) Int Cl.:
*G01D 4/00* (2006.01)        *G08C 17/02* (2006.01)
*H01Q 21/24* (2006.01)      *H04B 7/08* (2006.01)
*H04Q 9/00* (2006.01)        *H04B 7/10* (2017.01)

(21) Anmeldenummer: **16020291.7**

(22) Anmeldetag: **29.07.2016**

(54) **DATENERFASSUNGSSYSTEM MIT EINEM MEHRANTENNEN-DATENSAMMLER MIT INTEGRIERTER QUELLENTRENNUNG DURCH RÄUMLICHE FILTERUNG ZUM EMPFANG VON MESSWERTEN VON VERBRAUCHSZÄHLERN**

DATA ACQUISITION SYSTEM WITH A MULTI- ANTENNA DATA COLLECTOR WITH INTEGRATED SOURCE SEPARATION THROUGH SPATIAL FILTERING FOR RECEPTION OF READINGS OF CONSUMPTION METERS

SYSTEME DE SAISIE DE DONNEES COMPRENANT UN COLLECTEUR DE DONNEES MULTI-ANTENNE AYANT UNE SEPARATION DE SOURCE INTEGREE PAR FILTRAGE SPATIAL DESTINE A RECEVOIR DES VALEURS DE MESURE DE COMPTEURS DE CONSOMMATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2015 DE 202015005283 U**

(43) Veröffentlichungstag der Anmeldung:
**01.02.2017 Patentblatt 2017/05**

(73) Patentinhaber: **iAd Gesellschaft für Informatik, Automatisierung und Datenverarbeitung mbH 90613 Grosshabersdorf (DE)**

(72) Erfinder:
• **Hampel, Hermann**
**90613 Grosshabersdorf (DE)**
• **Hampel, Johannes**
**90613 Grosshabersdorf (DE)**
• **Berold, Ulrich**
**90427 Nürnberg (DE)**

(74) Vertreter: **Dreykorn-Lindner, Werner Patentanwalt Steinlachstrasse 2 90571 Schwaig (DE)**

(56) Entgegenhaltungen:
EP-A1- 0 988 663          EP-B1- 1 264 221
DE-A1-102009 008 125    US-A1- 2010 040 178
US-A1- 2010 216 412

## Beschreibung

### Stand der Technik

Die Erfindung betrifft ein Datenerfassungssystem, welches mindestens ein mit einer Antenne verbundenes Funkmodul zur Anbindung mindestens eines mit einem Funksender ausgestatteten Remotemoduls eines Gerätes oder eines Verbrauchszählers über Kurzstreckenfunk aufweist, gemäß dem Oberbegriff des Patentanspruchs 1.

In jüngster Zeit werden intelligente Stromnetze eingeführt, wobei für die Verbrauchszählerablesung eine entsprechende Kommunikations-Infrastruktur notwendig ist. Versorgungsunternehmen, etwa Energieversorgungsunternehmen oder Wasserversorgungsunternehmen, erstellen die Verbrauchsabrechnungen auf der Basis von Zählerstandsdaten von den Kunden zugeordneten Verbrauchszählern, welche meistens in der Nähe der Verbrauchsstellen installiert sind.

Verbrauchszähler können beispielsweise Gaszähler, Wasserzähler, Stromzähler, Wärmezähler, Heizkostenverteiler etc. sein, wobei die Zählerstandsdaten jeweils für zurückliegende Verbrauchsperioden ein Maß für die an der Verbrauchsstelle verbrauchte Menge angeben. In der Regel erfolgt die Erfassung der Zählerstandsdaten bzw. die Zählerablesung für ein Haus, eine Wohnung oder ggf. eine einzelne Verbrauchsstelle mindestens einmal jährlich.

Eine Option sind drahtlose Systeme, wobei infolge der durch die Mehrweg-Funkausbreitung verursachten Interferenzfunklöcher auch für von den Verbrauchszählern gesendeten Funktelegramme in Gebäuden darauf geachtet wird, dass die Funksendeeinrichtung eines betreffenden Verbrauchszählers im potenziellen Empfangsbereich mindestens zweier solcher stationärer Empfänger liegt. Die Komponenten für den Funkempfang und für die Funkweiterleitung sind jedoch in Beschaffung, Montage, Inbetriebnahme und Betrieb relativ teuer, so dass sich (vor allem bei einer meist nur jährlichen Verbrauchsabrechnung) ihr Betrieb nicht aus den eingesparten Kosten für das Ablesepersonal finanzieren lässt. Bei genügend hoher Sendehäufigkeit der Verbrauchszähler kann es praktikabel sein, die Funkauslesung der Verbrauchszähler mittels mobiler Empfänger durchzuführen. Dabei hat das Ablesepersonal mit einer mobilen Funkempfangs-Datenübernahmeinrichtung eine Datenerfassungstour zu absolvieren, bei der die Funkempfangs-Datenübernahmeinrichtung nacheinander in die Bereiche der Sendereichweiten der per Funk auszulesenden Verbrauchszähler gebracht wird. Beim sogenannten drive-by wird die mobile Funkempfangs-Datenübernahmeinrichtung mit einem Fahrzeug langsam eine Straße entlang bewegt, an der Häuser mit zur Verbrauchsdaten-Erfassung anstehenden "funkenden" Verbrauchszählern stehen; beim sogenannten walk-by geht die die Funkempfangs-Datenübernahmeinrichtung mitführende Person das betreffende Gebiet zu Fuß ab; beim sogenannten walk-in begeht die die mobile Funkempfangs-Datenübernahmeinrichtung mitführende Person über das Treppenhaus alle Stockwerte des Hauses, um von sämtlichen zur Funkauslesung anstehenden Ver brauchszählern die unidirektional von den Sendeeinrichtungen der Verbrauchszähler gesandten Sendetelegramme nacheinander zu empfangen. Ein solches mobiles Verbrauchsdatenerfassungssystem und ein Verfahren zur Funkauslesung der Verbrauchszähler bei der Datenerfassungstour ist beispielsweise aus der DE 101 33 366 C2 bekannt. Im Einzelnen weist das Verbrauchsdaten-erfassungssystem eine in Sendereichweite der Funkesendeeinrichtung des Verbrauchszählers zu bringende mobile Datenübernahmeinrichtung mit einer Funkempfangseinrichtung zum Empfang der von dem betreffenden Verbrauchszähler gesendeten Daten und ein mit der Funkempfangseinrichtung in Kommunikationsverbindung stehendes, insbesondere mit der Daten-Übernahmeinrichtung zu einer Geräteeinheit kombiniertes Mobilfunksende- und -empfangsgerät eines Mobilfunksystems auf. Das Mobilfunksende- und -empfangsgerät ist dazu eingerichtet, die von einem betreffenden Verbrauchszähler mittels der Funkempfangseinrichtung übernommenen Zählerstandsdaten in Zuordnung zu den Zähleridentifikationsdaten zu einer zentralen Datenerfassungsstelle zu senden. Die gesendeten Daten werden über das Mobilfunksystem zu der zentralen Datenerfassungsstelle innerhalb eines bestimmten Zeitintervalls, das mit dem Zeitpunkt der Übernahme der Zählerstandsdaten in die Datenübernahmeinrichtung beginnt, übertragen. Weiterhin werden Ortsinformationen, wobei die Gerätekombination aus Datenübernahmeinrichtung und Mobilfunksende- und -empfangsgerät zusätzlich Komponenten eines Orts-Lokalisierungssystems - insbesondere GPS-Funkortungssystems - umfasst, über die Lage der Verbrauchszähler über das Mobilfunksystem von der Datenerfassungsstelle zu dem Mobilfunk-Endgerät der Datenerfassungsperson gesendet. Ein Rechner der zentralen Datenerfassungsstelle kann die Reihenfolge der zur Auslesung anstehenden Verbrauchszähler so festlegen, dass die von der Datenerfassungsperson zurück zu legenden Wege möglichst keine Umwege umfassen. Falls ein Zähler unbeabsichtigt ausgelassen wird oder wegen eines Defektes, einer Störung und dergleichen kein Signal sendet, wird dies in der zentralen Datenerfassungsstelle automatisch registriert, weil von einem solchen Zähler kein erwarteter Datensatz mit Identifikationsdaten zu der zentralen Datenerfassungsstelle gelangt. Von der zentralen Datenerfassungsstelle wird dann automatisch eine entsprechende Rückmeldung über den nicht erfassten Verbrauchszähler über das Mobilfunksystem zu der Datenerfassungsperson veranlasst. Diese kann erneut die Gerätekombination in den Bereich der Soll-Funkreichweite des ausgelassenen Verbrauchszählers führen, um durch etwaige Suche nach empfanggünstigeren Standorten eventuell doch noch ein Datentelegramm (Zählerstandsdaten, Zähleridentifikationsdaten, Ortsinformationsdaten) von dem betreffenden Verbrauchszähler zu empfangen. Funktioniert auch dies nicht, kann die Datenerfassungsperson vor Ort versuchen, Zugang zu dem Verbrauchszähler zu erhalten, um das Problem zu erkennen und möglicherweise auch gleich zu beheben. Die Sendeleistung und die Sendereichweite des so genannten Primärfunksenders ist vergleichsweise gering, es kann eine Sendereichweite von wenigen Metern ausreichen, und die Sendehäufigkeit liegt bei mehreren Funktelegrammen pro Minute, wobei die Dauer jedes Funktelegramms kurz ist und z. B. nur einige Millisekunden beträgt. Die Datenübernahmeeinrichtung D enthält ferner ein Endgerät eines öffentlichen WAN-Mobilfunksystems, wobei dieses so genannte Sekundärfunk-Endgerät ein Funktelefon und/oder ein Funkmodem, insbesondere nach einem oder mehreren der Standards: GSM, SMS, GPRS, UMTS, TETRA sein kann. Die Gerätekombination kann auch noch dazu genutzt werden, die Daten neu montierter Verbrauchszähler zum Zwecke der Ergänzung der Datenbank in der zentralen Datenerfassungsstelle zu übermitteln.

In der Praxis wurde festgestellt, dass funkende Verbrauchszähler für die mobile Funkauslesung und funkende Verbrauchszähler für die stationäre Funkauslesung deutliche Unterschiede in den Anforderungen an die Funktelegrammlänge, Sendehäufigkeit und Sendeleistungen aufweisen, aber jeweils mit einer Batterie akzeptabler Größe und mit einem kleinen Pufferkondensator auskommen können. In Weiterbildung ist aus der DE 101 33 367 C2 ein universell einsetzbarer funkender Verbrauchszähler bekannt, der dazu vorbereitet ist, dass er in wenigstens zwei unterschiedlichen Sendebetriebsarten senden kann. Nämlich in einer ersten Sendebetriebsart werden Funktelegramme aussendet, die im Telegrammaufbau oder/und Sendehäufigkeit oder/und Sendeleistung für den mobilen Funkempfang (mobile Funkauslesung) optimiert sind. In einer zweiten Sendebetriebsart werden Funktelegramme aussendet, die im Telegrammaufbau oder/und Sendehäufigkeit oder/und Sendeleistung für den Empfang mit stationären Funkempfängern (stationäre Funkauslesung) optimiert sind. Dabei weist der Verbrauchszähler in der Sendebetriebsart für stationäre Funkauslesung eine Sendeleistung auf, die um wenigstens 3 Dezibel größer ist als die Sendeleistung in der Sendebetriebsart für die mobile Funkauslesung. Der Verbrauchszähler sendet in der Sendebetriebsart für mobile Funkauslesung Funktelegramme, die um wenigstens 30% länger sind als die Funktelegramme in der Sendebetriebsart für stationäre Funkauslesung. Vorzugsweise ist die größere Funktelegrammlänge, d. h. größere Datenmenge, dadurch begründet, dass Zählerstandsinformationen aus zurückliegenden Zeitpunkten zusätzlich zu den aktuellen Zählerstandsinformationen in den Funktelegrammen enthalten sind. Der Verbrauchszähler führt vollautomatisch, z. B. unter der Kontrolle eines Mikroprozessors, beide Sendebetriebsarten im Wechsel durch, so dass derselbe Zähler im periodischen oder im nicht periodischen, quasi statistischen Wechsel mit vorgebbarer relativer Häufigkeit Funktelegramme für stationäre Funkauslesung und Funktelegramme für mobile Funkauslesung sendet. Bei mehrgeschossigen Wohnhäusern ist ein Empfangsgerät (Primärfunk) mehreren, vorzugsweise allen funkenden Verbrauchszählern zugeordnet, so dass die Anschaffungs- und Installationskosten für die stationären Empfangsgeräte bei gesamtwirtschaftlicher Betrachtung durchaus akzeptabel sind, da die Verbrauchsdatenerfassung bei den Häusern kein Auslesepersonal erfordert und somit Personalkosten eingespart werden können. Im Fall eines Siedlungsgebietes mit Einfamilienhäusern wird die Funkauslesung der Zähler mit der mobilen Gerätekombination (Funkempfangsgerät und Funktelefon und/oder ein Funkmodem für den Sekundärfunk) durchgeführt. Allgemein wäre es möglich, sämtliche Verbrauchszähler mit der mobilen Gerätekombination auszulesen. Andererseits besteht die Möglichkeit, stationäre Empfänger auch in den Häusern nachträglich einzubauen, um auf stationäre Funkauslesung überzugehen, etwa weil die Anschaffungs- und Installationskosten für stationäre Funkempfänger im Verhältnis zu den Personalkosten bei der mobilen Funkauslesung soweit gesunken sind, dass die stationäre Funkauslesung auch bei den Häusern wirtschaftlich geworden ist. An den Verbrauchszählern muss bei einem solchen Wechsel der Empfangsart nichts geändert werden.

Wie die vorstehende Würdigung des Standes der Technik aufzeigt, sind unterschiedlich ausgestaltete Systeme zur automatischen Verbrauchsdatenerfassung, beispielsweise Funksysteme mit einem oder mehreren stationären Empfänger oder Ablesung mit einem mobilen Empfänger, bekannt. In der Regel sind die Geräte für das Energieversorgungsunternehmen derart ausgestaltet, um die Verbrauchsdaten am Ort des Entstehens (also beim Endkunden, z.B. Heimbereich, aber auch Industrie oder Kommunen), möglichst einfach und kostengünstig zu erfassen (Ressourcenzähler z.B. Wasserzähler) und ebenfalls möglichst einfach und kostengünstig an einen Datensammler bei der Datenerfassungstour oder zu einer Zentrale zu übertragen (Kommunikationsverfahren), wo diese in automatisierten Abrechnungen für die oben genannten Endkunden verarbeitet werden können. Der Anwender ist immer das Energieversorgungsunternehmen, welches die Ressourcenzähler beschafft, beim Kunden einbaut, wartet, abliest; das Gleiche gilt für die Kommunikationseinrichtungen. Der Nachteil von Systemen mit stationär im Gebäude montierten Funkempfängern ist, dass die Systemkosten deutlich höher ausfallen als bei Systemen ohne stationären Empfänger. Zudem gehen bei Ausfall des Empfängers alle gespeicherten Verbrauchswerthistorien sämtlicher empfangenen Sender verloren. Um dies zu vermeiden, müssen durch weitere Empfänger kostenintensive Redundanzen für die Verbrauchsdatenübertragung per Funk hergestellt werden. Die Verbrauchszählerdaten werden beim vorstehend gewürdigten Stand der Technik stets an eine Zentrale oder an einen Datensammler bei der Datenerfassungstour zur Abrechnung zu übertragen, bzw. es werden eventuelle Leckagen an eine Zentrale gemeldet. Wenig Beachtung fand jedoch die Ausgestaltung von zuverlässig arbeitenden, offenen Kommunikationssystemen zur Verbrauchsdatenerfassung. In der Stadt entstehen zusätzliche Belastung des genutzten Frequenzbereichs durch andere allgemein zugelassene Funksysteme (z.B. Drahtlos-Kopfhörer, Baby-Phone o.ä.), aber auch starke Signale in benachbarten Frequenzbereichen. Dies umfasst auch beispielsweise die Versorgung der elektrischen Stadtbusse und deren nahegelegene Oberleitungen. In ländlicher Umgebung ohne störende Gebäude und schmale Gassen können größere Reichweiten erzielt werden, was die Kollisionswahrscheinlichkeit wieder erhöht. Demgemäß sind in der Stadt viele Kollisionen und starke Kanalbelastung und auf dem Land eine geringere Kanalbelastung, aber größere Abstände feststellbar und es fehlt in der Praxis ein Verbrauchsdatenerfassungssystem, welches unabhängig von anderen technischen Gegebenheiten universell einsetzbar ist und dessen Empfängersystem eine zuverlässige Quellentrennung bietet. Besonders bedeutsam ist dies, weil sowohl die Messgeräte herstellende Industrie als auch die Telekommunikationsindustrie als äußerst fortschrittliche, entwicklungsfreudige Industrien anzusehen sind, die schnell Verbesserungen und Vereinfachungen aufgreifen und in die Tat umsetzen.

Weiterhin ist aus der US 2010/0216412 A1 für ein drahtloses Kommunikationssystem, insbesondere Mobiltelefonsystem o.ä. nach IEEE 802.11, 802.15, 802.16, ein konfigurierbarer Sender/Empfänger und ein Verfahren zur Verwendung in dem konfigurierbaren Sender/Empfänger für Kommunikationsgeräte, welche nach dem Funkprotokoll Global System for Mobile Communications (GSM), General Packet Radio Service (GPRS) Enhanced Data Rates for Global Evolution (EDGE), Personal
Communication Services (PCS) bidirektional in mehreren Frequenzbändern Sprach-, Audio-, Video- und Multimedia-Nachrichten miteinander kommunizieren, bekannt. Im Einzelnen enthält der konfigurierbare Sender/Empfänger (Transceiver):

- eine Konfigurationssteuereinrichtung, die zumindest ein Steuersignal erzeugt, das einen Isolationsmodus, einen Frequenzmodus und einen Antennenmodus anzeigt;
- eine Antennenvorrichtung, welche eine Vielzahl von Antennen umfasst und die mit der Konfigurationssteuereinrichtung verbunden ist, wobei die Konfigurationssteuereinrichtung basierend auf dem Antennen-Modus-Steuersignal eine Antennenkonfiguration auswählt;
- einen Isolationsabschnitt, der eine Vielzahl von Isolationsschaltungen aufweist und der mit der Antennenvorrichtung und der Konfigurationssteuereinrichtung verbunden ist und basierend auf dem Isolationsmodus-Steuersignal eine Isolationsschaltung auswählt;
- einen HF-Abschnitt, der mit dem Isolationsbereich und der Konfigurationseinrichtung verbunden ist und basierend auf dem Frequenzmodus-Steuersignal eine HF-Konfiguration auswählt und
- einen Basisbandabschnitt, der mit dem HF-Abschnitt und der Konfigurationssteuereinrichtung verbunden ist, um eine Basisbandkonfiguration auf dem zumindest einem Modus-Steuersignal basierend auszuwählen.

Das Verfahren zur Verwendung im konfigurierbaren Sender/Empfänger (Transceiver) umfasst:

- die Erzeugung eines Trennmodus, eines Frequenzmodus und eines Antennenbetriebsmodus und Anzeige mittels Modus-Steuersignal einer Konfigurationssteuereinrichtung,
- eine Antennenkonfiguration für eine Antennenvorrichtung, welche eine Vielzahl von Antennen aufweist, basierend auf dem zumindest eine Modus-Steuersignal,
- eine HF-Konfiguration eines HF-Auswahlabschnitt basierend auf dem zumindest einen Modus-Steuersignal,
- Auswählen eine Basisband-Konfiguration eines Basisbandabschnitt basierend auf dem zumindest einen Modus-Steuersignal, und
- Auswählen der Antennen der Antennenkonfiguration um eine der Vielzahl von Isolationsschaltungen zu koppeln, basierend auf dem zumindest einen Modus-Steuersignal.

Auf diese Weise kann die Konfigurationssteuereinrichtung die Kanalnutzung und den Antennenmodus für einen effizienten Durchsatz auf der Basis der Kanalbedingungen, insbesondere nach Maßgabe der Kanaldaten und der Anforderungsdaten, konfigurieren.

Weiterhin ist aus der EP 1 264 221 B1 ein Überwachungssystem für einen industriellen Prozess, beispielsweise bei der Erdölraffinierung, Nahrungsmittelverarbeitung, biologische Verarbeitung, Papierverarbeitung, Arnzneimittelherstellung u.ä. bekannt. Das Überwachungssystem weist eine Vielzahl von Vorrichtungen, ein Empfangsmodul, das mit der Vielzahl von Vorrichtungen gekoppelt ist, um Eingänge von den Vorrichtungen zu empfangen und ein Verarbeitungsmodul, das mit dem Empfangsmodul gekoppelt ist, um eine Analyse der Vorrichtungseingänge zu erzeugen, auf. Im Einzelnen umfasst das Verarbeitungsmodul ein Speichermodul zum
Speichern von Modellen eines Phänomens, ein Anwendungsmodul zum Anwenden des Modells auf die Vorrichtungseingange und ein Diagnosemodul zur Erzeugung eines Descriptors eines Zustands des Phanomens unter Verwendung des Speichermoduls und des Anwendungsmoduls auf. Das Diagnosemodul erzeugt einen ersten Descriptor unter Verwendung eines ersten Modells und einen zweiten Descriptor unter Verwendung eines zweiten Modells. Der Descriptor des Zustands des Phänomens wird auf Grundlage des ersten Descriptors und des zweiten Descriptors erzeugt. Weiterhin ist ein Benachrichtigungsmodul vorgesehen, das mit dem Verarbeitungsmodul gekoppelt ist, um einen Ausgang unter Verwendung der Analyse zu erzeugen und eine Lieferung des Ausgangs zu managen. Schließlich ist ein Kommunikationsmodul vorgesehen, das mit dem Benachrichtigungsmodul gekoppelt ist, um den Ausgang zu liefern. Die Vorrichtungen umfassen ferner chemische Sensoren, Wärmesensoren, mechanische Sensoren, Strahlungssensoren, biologische Sensoren, magnetische Sensoren oder elektrische Sensoren.

## Problem

Der Erfindung liegt gegenüber den bekannten Verbrauchsanzeigegeräten mit Funkempfänger im Heimbereich und Datenerfassungssystem die Aufgabe zugrunde, dieses derart auszugestalten, dass trotz Störungen des gewünschten Telegramms und starker Kanalbelastung ein sicheres Erfassen von Verbrauchsdaten unter Trennung überlagerter drahtloser Zählertelegramme ermöglicht wird.

## Erfindung

Diese Aufgabe wird, gemäß Patentanspruch 1, dadurch gelöst, dass das Datenerfassungssystem, welches mindestens ein mit einer Antenne verbundenes Funkmodul zur Anbindung mindestens eines mit einem Funksender ausgestatteten Remotemoduls eines Gerätes oder eines Verbrauchszählers über Kurzstreckenfunk aufweist, zur sicheren Erfassung von Verbrauchsdaten unter Trennung überlagerter drahtloser Zählertelegramme das Datenerfassungssystem einen Mehrantennen-Datensammler aufweist und die Antenne als Kombination von Antennenelementen mit horizontaler und/oder vertikaler Polarisation ausgestaltet ist, dass zur Quellentrennung durch Richtungsschätzung und virtuellen Sektorisierung eine Kombination aus Kerb- und räumlichen Bandpassfilter benutzt wird, dass als Kurzstreckenfunk wireless M-BUS und zur Quellentrennung ein Verfahren gemäß "Principal component Analysis (PCA)" benutzt wird und dass der Mehrantennen-Datensammler einen Mehrkanalempfänger mit räumlicher Filterung und Selektion der Antennenelemente, einschließlich paralleler Auskopplung, aufweist.

## Vorteilhafte Wirkungen der Erfindung

Das erfindungsgemäße Datenerfassungssystem weist den Vorteil auf, dass auf überraschend einfache Art und Weise störende Signale wie Rauschen gedämpft werden, wenn sie während der Schätzung der Kovarianz-Matrix nicht vorhanden sind und einen ausreichenden räumlichen Abstand aufweisen. Alle weiteren Signale werden entsprechend ihrem Einfallswinkel und der Struktur des Antennenarrays gedämpft. Die Leistungsfähigkeit der Signaltrennung kann aus den Zwischenwinkeln der beteiligten Eigenvektoren abgeschätzt werden, die aus den unterschiedlichen Einfallswinkeln der Signale resultieren und im Allgemeinen nicht orthogonal sind. Damit kann die Signaltrennung nicht nur nach Einfallswinkel, sondern auch nach Polarisation erfolgen.

Weiterhin weist die Erfindung die Vorteile auf, dass der wMBus insbesondere einen extrem stromsparenden unidirektionalen Betrieb bietet, dass die Quellentrennung nach dem Verfahren der "Principal component Analysis (PCA)" die Empfangsdaten auf die wesentliche "Merkmale" reduziert und dass aus den Antennenelementen parallel die horizontale und vertikale Polarisation ausgekoppelt wird, was Vorteile bei unbekannter Polarisation der zu empfangenden Signale bietet.

## Darstellung der Erfindung

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:

FIG. 1      das Blockschaltbild eines RF-Frontend zur Frequenzumsetzung, Filterung und Verstärkung der Signale gemäß der Erfindung,

FIG. 2      zeigt den die Orthogonalität kennzeichnenden Winkel $\zeta$ für eine gleichförmige, lineare Antennenanordnung (ULA) über der Differenz $\Delta\phi$ der Einfallswinkel zweier Signale,

FIG. 3      zeigt eine vergleichbare Auswertung für kreisförmig angeordnete Antennenelemente,

FIG. 4      betrachtet zusätzlich eine "ausgedünnte" Antennenanordnung mit übergroßen Abständen der Elemente im Vergleich zum ULA gemäß FIG. 2,

FIG. 5      zeigt die resultierende Dämpfung über der Einfallswinkeldifferenz,

FIG. 6      zeigt die resultierenden Dämpfungen für Signale mit anderen Einfallswinkeln und

FIG. 7a,7b      die Quellentrennung mittels räumlichen Bandpassfilter bzw. räumlichen Kerbpassfilterung für zwei Telegramme und acht Empfangskanälen.

Auf einem anderen, nicht benachbarten technischen Gebiet, nämlich dem von Sekundärradarsystemen, ist aus der WO 2010/0606651 A1 der Anmelderin eine Vorrichtung zum Empfang von Sekundärradarsignalen bekannt, bei dem eine bessere Separierung von Objekten, insbesondere bei hoher Anzahl von Objekten im Beobachtungsraum, und damit auch höhere Robustheit gegenüber Störsignalen sowie auch von Mehrwegeausbreitung erzielt wird. Hierzu weist die Vorrichtung:

- mindestens eine aus N Antennenelementen bestehende Antennenanordnung zum Empfang von gesendeten Sekundärradarsignalen,
- eine an einen Anschlusspunkt des jeweiligen Antennenelements angeschlossene Signal-Verarbeitungseinheit mit einer Koppelmatrix mit einstellbaren Koeffizienten zur Sektorisierung eines zu überwachenden Raumes durch Überlagerung der Antennensignale mittels multiplikativadditiver Verknüpfung der empfangenen Antennensignale und
- mindestens einen mit der Koppelmatrix verbundenen Empfänger m auf,

so dass jeder Empfänger m bei einer dynamischen Sektorisierung für jedes Empfangstelegramm eine andere mit bestimmten Koppelkoeffizienten gewichtete Überlagerung der Antennensignale erhält, wobei im quasi-dynamischen Fall die einstellbaren Koeffizienten über eine längere Zeit fest sind. Bei der quasi dynamischen oder dynamischen Sektorisierung des zu überwachenden Raumes überlagert eine zentrale Verarbeitungseinheit in vorteilhafter Weise die Antennensignale mittels einer Koppelmatrix und stellt den m Empfängereinheiten jeweils eine mit bestimmten Koppelkoeffizienten gewichtete Überlagerung der Signale zur Verfügung. Das den einzelnen Empfängereinheiten zugeführte Signal kann von diesen in gleicher Weise verarbeitet werden wie bei herkömmlichen Einzelantennensystemen. Dadurch können bisherige Einzelkanalempfänger bzw. darin implementierte Algorithmen weiterhin verwendet werden. Dabei erhält in der Regel jeder Empfänger eine andere Kombination von Koppelkoeffizienten, wodurch die einzelnen Empfänger auf verschiedene Sender oder verschiedene Empfängercharakteristiken (Beams) optimiert werden können. Insbesondere ist durch die sich ständig ändernden Positionen der Sender (Flugzeuge) eine dynamische Anpassung der Empfängercharakteristik besonders vorteilhaft. Dies ist jedoch nicht zwingend erforderlich, da die Koppelkoeffizienten auch einmalig ermittelt und dann statisch (quasi dynamisch) verwendet werden können. Diese einfache Variante der Vorrichtung gemäß der WO 2010/0606651 A1 ist im Aufwand vergleichbar zur elektronischen Realisierung mehrerer fest ausgerichteter Sektorantennen.

Die Koeffizienten werden dabei derart gewählt, dass für jeden Empfänger ein bestimmter Sektor (auch Beam) des zu überwachenden Raums fokussiert wird. Ein Sektor muss dabei nicht notwendigerweise ein einzelner zusammenhängender Raumbereich sein, sondern kann eine mehr oder weniger beliebige Kombination mehrerer Raumbereiche sein. Erfolgt die Anpassung der Beam- Formen (durch Anpassung der Koeffizienten) dynamisch im Betrieb, so können diese jederzeit an die aktuellen Anforderungen bzw. die aktuelle Situation im Luftraum angepasst werden.

Die Optimierung eines Beam erfolgt dabei vorzugsweise derart, das s das Maximum des Beam möglichst über dem interessierenden Objekt (für den jeweiligen Empfänger) liegt. Die Optimierung eines Beam kann weiterhin auch vorzugsweise derart erfolgen, dass (für den jeweiligen Empfänger) Nullstellen des Beam über auszublendende Objekte gelegt werden. In einer weiteren vorzugsweisen Ausgestaltung kann die Optimierung eines Beam auch hinsichtlich der beiden vorgenannten Ziele (Maximum über interessierendes Objekt und Nullstellen über auszublendende Objekte) gemeinsam erfolgen. Diese Optimierungsmöglichkeiten kann insbesondere vorteilhaft angewendet werden, wenn bereits Informationen über die Position anderer Objekte (z.B. Transponder anderer Flugzeuge) vorliegen, aufgrund der Tatsache, dass sich diese Positionen nur relativ langsam im Vergleich zum Öffnungswinkel ändern. Die Positionen sind weiterhin durch kontinuierliche Bewegung der Objekte kurzzeitig einfach vorhersagbar durch Verfolgung der Bahnen (Trajektorien) der Objekte.

Vorzugsweise werden dabei einerseits feste Sektoren gebildet, andererseits Sektoren, die dynamisch gemäß den aktuellen Anforderungen nachgeführt werden. Durch diese Kombination lässt sich sowohl eine hohe Zuverlässigkeit (d.h. die Auswirkungen möglicher Fälle ungünstiger dynamischer Sektor/Koeffizientenwahl können durch zusätzliche feste Sektoren reduziert werden) als auch eine hohe Dynamik des Systems (durch dynamische Optimierung hinsichtlich Maximum und/oder Nullstellen, wie bereits ausgeführt) erzielen. Der Prozess der Trennung von falschen bzw. mehrdeutigen von korrekten Telegrammen wird "Degarbling" genannt.

Die Erfindung wird anhand der Anwendung in intelligenten Stromnetzen beschrieben, wo die Option Powerline-Übertragung für die Übertragung von Messwerten von Energiezählern über Stromleitungen nicht vorhanden ist.

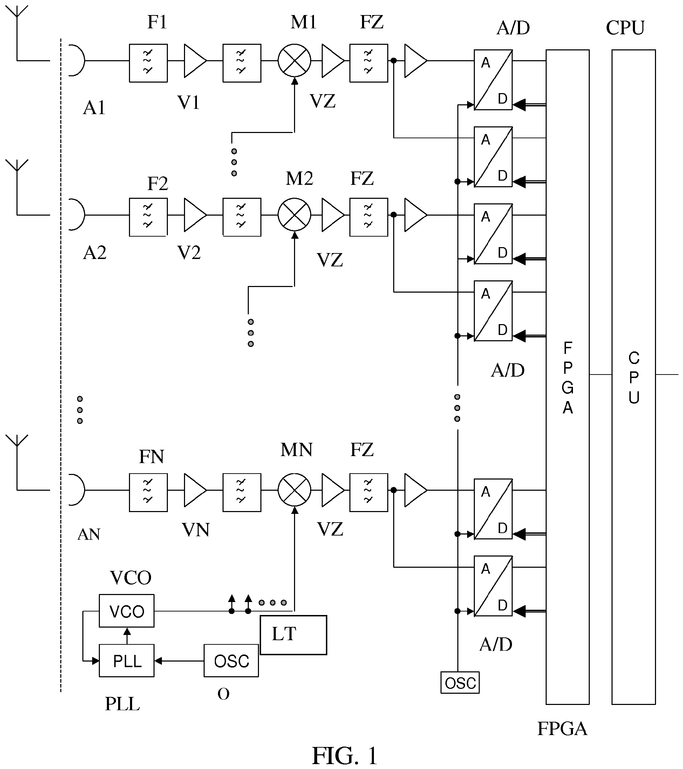

**FIG.1** zeigt das erfindungsgemäße RF-Frontend zur Frequenzumsetzung, Filterung und Verstärkung der Signale für den Anwendungsfall der sicheren Erfassung von Verbrauchsdaten unter Trennung überlagerter drahtloser Zählertelegramme. Hierfür sind verschiedene Funksysteme verbreitet, beispielsweise ZigBee in USA, wireless M-BUS (=wMBus,) in Europa oder U-Bus in Japan. wMBus bietet insbesondere extrem stromsparenden unidirektionalen Betrieb, jedoch keine Kollisionserkennung und keine Wiederholung von Übertragungen. Daher tritt bei wMBus eine höhere Wahrscheinlichkeit für Paketverluste auf, andere Systeme leiden jedoch auch unter Störungen durch andere Applikation im deren Frequenzbereich. Für wMBus bieten sich z.B. Verfahren wie "cognitive separation" (siehe beispielsweise R. C. Qiu, Z. Hu, Z. Chen, N. Guo, R. Ranganathan, S. Hou and G. Zheng, "Cognitive Radio Network for the Smart Grid: Experimental System Architecture, Control Algorithms, Security, and Microgrid Testbed", veröffentlich in IEEE Transactions on Smart Grid, Vol. 2, no. 4, pp. 724-740, 2011) auf Basis einer "principal component analysis (PCA)" (siehe beispielsweise I.T. Jolliffe "Principal Component Analysis", veröffentlicht Springer-Verlag New York, Inc., 2002) an. Es gibt bereits größere Testaufbauten für solche Systeme (siehe beispielsweise R. C. Qiu, Z. Chen, N. Guo, Y. Song, P. Zhang, H. Li und L. Lai "Towards A Real-time Cognitive Radio Network Testbed: Architecture, Hardware Platform and Application to Smart Grid", IEEE Workshop on Network Technologies for Software Defined Radio (SDR) Networks, pp. 1-6, 2010), jedoch meist mit Eingriff in den Sendeablauf.

Für jedes Antennenelement A1, .., AN, das jeweils eine vertikale oder horizontale Polarisation aufweisen kann, und die in verschiedenen Geometrien angeordnet sein können, erfolgt zunächst eine separate analoge Signalverarbeitung. Hierbei werden die Signale mittels Filter F1, ..., FN von Außerbandstörungen befreit und in rauscharmen Verstärkern V1, ..., VN in der Amplitude angehoben, bevor durch einen Mischer M1, ...., MN die Umsetzung von der Empfangsfrequenzlage in eine Zwischenfrequenzlage, beispielsweise 10,7 MHz folgt. Wesentlicher Punkt dabei ist die Verwendung synchroner Steuersignale für die Mischer M1, ...., MN der N Empfangskanäle, weshalb diese durch einen Leistungteiler LT aus einem gemeinsamen Oszillator VCO abgeleitet werden. Die Wahl der Empfangsfrequenz kann durch eine Phasenregelschleife PLL unter Rückbezug auf einen Referenzoszillator, z.B. einen Quarzoszillator O, flexibel erfolgen.

In der Zwischenfrequenzlage werden die Signale weiter verstärkt VZ und auf die erforderliche Nutzbandbreite FZ gefiltert, um Störsignale weiter zu reduzieren, bevor nach Umsetzung A/D (Abtastrate beispielsweise 2 Mbit/s) in digitale Signale die weitere Verarbeitung in einem FPGA durchgeführt werden kann. Die Nutzung eines Leistungteilers, eines weiteren Verstärkers und Analog-Digital-Umsetzers erlaubt die Erweiterung des nutzbaren Dynamikbereichs über die Leistungsfähigkeit eines einzelnen Umsetzers hinaus (in **FIG: 1** nicht dargestellt). In einem FPGA oder ASIC erfolgt die Berechnung der im Weiteren beschriebenen Signaltrennung und die Demodulation der zu empfangenen Daten. Eine CPU übermittelt diese Telegramme bzw. die darin enthaltenen Zählerdaten, ggf. nach geeigneter Verarbeitung z.B. an eine externe Sammelstelle oder speichert diese für eine spätere Übertragung oder Abfrage.

Basis für die Quellentrennung ist die "Principal component Analysis (PCA)", siehe beispielweise auch R. Ranganathan, R. Qiu and S. Hou "Blind Recovery of Smart Meter Wireless Transmissions employing Independent Component Analysis in the presence of Strong Wideband Interference", Communication Networks for Smart Grid (IEEE SmartGrid-Comm), pp. 172-177, 2011. Die Empfangsdaten werden dabei auf wesentliche "Merkmale" reduziert, indem zunächst die Covarianzmatrix der Abtastwerte der Empfangskanäle, zusammengefasst in der Matrix X bestimmt wird:

$$\Sigma = E\{XX^H\} \tag{1}$$

Für die weitere Verarbeitung wird dann die Eigenwertzerlegung dieser Covarianzmatrix der Empfangssignale X verwendet (siehe beispielsweise K. Lee, C.-B. Chae, T.-K. Sung und J. Kang "Cognitive Beamforming Based Smart Metering for Coexistence with Wireless Local Area Networks", veröffentlicht in Journal of Communications and Networks , Vol. 14, no. 6, pp. 619-628, Dec. 2012 oder R. Qiu, Z. Hu, Z. Chen, N. Guo, R. Ranganathan, S. Hou und G. Zheng, "Cognitive Radio Network for the Smart Grid: Experimental System Architecture, Control Algorithms, Security, and Microgrid Testbed", veröffentlicht in IEEE Transactions on Smart Grid , Vol. 2, no. 4, pp. 724-740, 2011):

$$\Sigma = UVU^* \tag{2}$$

Die Maximierung der Eigenwerte führt zu phasenrichtiger Addition der Kanäle und damit zur Konzentration des gewünschten Telegramms in der ersten Komponente. Unkorrelierte Signale (Rauschen) werden über die übrigen Komponenten verteilt, wobei ein Empfangstelegramm bei einem Mehrkanalempfänger in mehreren Signalkanälen enthalten ist.

1 verschiedene Eingangssignale werden mittels der 1 größten Eigenwerte und deren Eigenvektoren in einen 1-dimensionalen Unterraum $X_s$ gemäß der Gleichung (3)

$$X_s = U_s X \tag{3}$$

transformiert (siehe A. Sikora, R. Werner, P. Lehmann und J.O. Grafmueller, "Design, Implementation and Verification of an Energy Autarkic RF-based Water Meter with Energy Aware Routing", veröffentlicht in Proceedings of Energy selfsufficient sensors, pp. 1-5, 2014.), der dann idealerweise diese 1 Signale enthält. Im Gegensatz zur blinden Rekonstruktion in R. Ranganathan, R. Qiu and S. Hou "Blind Recovery of Smart Meter Wireless Transmissions employing Independent Component Analysis in the presence of Strong Wideband Interference" a.a.O., sind hier die Positionen der Antennenelemente innerhalb des Arrays bekannt. Die Transformation entspricht damit einer digitalen Strahlformung jeweils in die Richtung der 1 Empfangssignale, wobei ein einzelnes Signal dabei eine Verbesserung des Rauschabstandes (SNR) erfährt. Störende Signale werden wie Rauschen gedämpft, wenn sie während der Schätzung der Kovarianz-Matrix nicht vorhanden sind und einen ausreichenden räumlichen Abstand aufweisen. Alle weiteren Signale werden entsprechend ihrem Einfallswinkel und der Struktur des Antennenarrays gedämpft. Die Leistungsfähigkeit der Signaltrennung kann aus den Zwischenwinkeln der beteiligten Eigenvektoren abgeschätzt werden, die aus den unterschiedlichen Einfallswinkeln der Signale resultieren und im Allgemeinen nicht orthogonal sind.

Erfindungsgemäß wird, wie in C. Reck, U. Berold and L.-P. Schmidt "Detection of SSR signals in multipath airport enviroments by a multichannel receiver", veröffentlicht in Asia-Pacific Microwave Conference (APMC) Proceedings, pp. 1685-1688, 2010 auf einem anderen technischen Gebiet beschrieben, die Trennbarkeit gemäß Gleichung (4) für verschiedene Antennen-Arraytypen anhand des Winkels $\zeta$ zwischen den Eigenvektoren der beteiligten Empfangssignale abgeschätzt:

$$\zeta = \arccos \left( |U_1^* U_2| \right) \quad (4),$$

wobei U1 und U2 die Eigenvektoren korrespondierend zu den Eigenwerten der Matrizen

$$\Sigma_1 = S_1 S_1^* \quad \text{and} \quad \Sigma_2 = S_2 S_2^* \quad (5)$$

sind. Die Vektoren S1 und S2 sind die Steuerungsvektoren für empfangene Signale des jeweiligen Antennen-Array. Der Winkel $\zeta$ stellt dabei ein Mass für die Orthogonalität der beiden Signale dar.

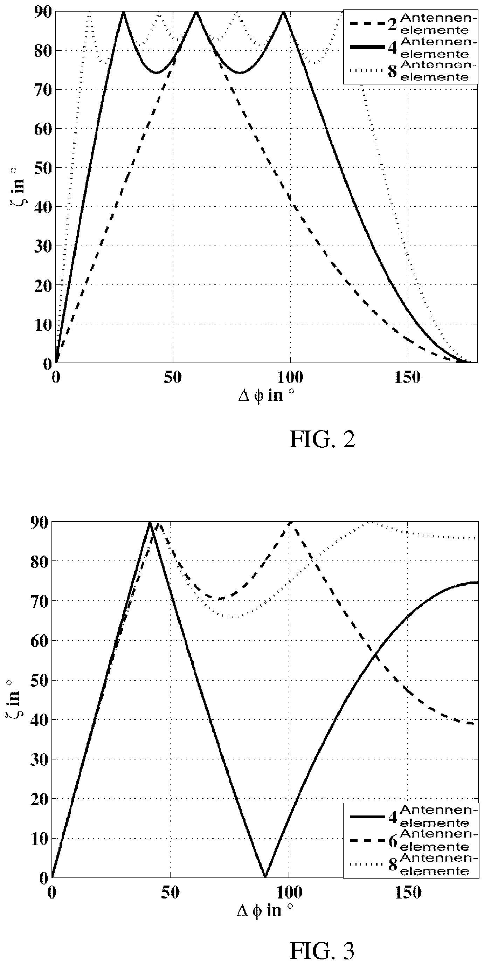

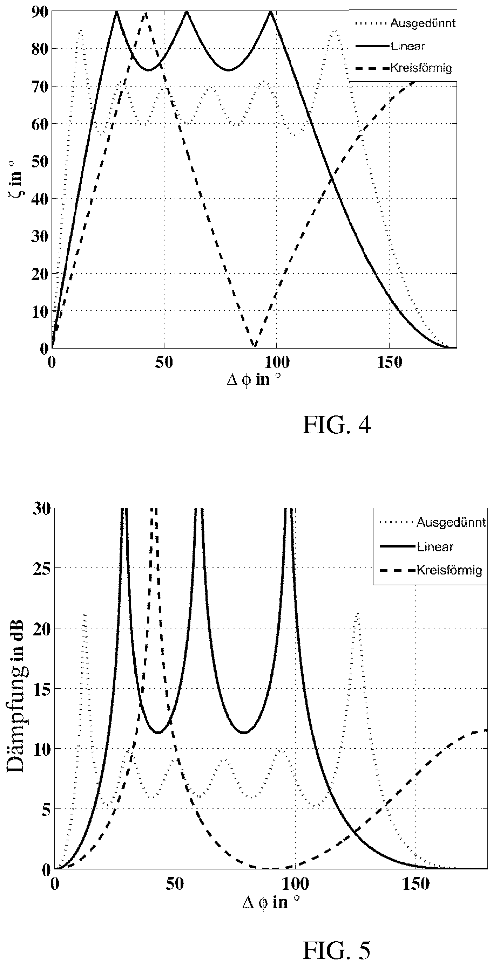

**FIG. 2** zeigt den Winkel $\zeta$ für eine gleichförmige, lineare Antennenanordnung (ULA) über der Differenz $\Delta\phi$ der Einfallswinkel zweier Signale. Näherungsweise gleiche Einfallswinkel führen zu einer schlechten Trennbarkeit, bei $\zeta$ um 90° ist eine perfekte Trennung möglich, bei größeren Differenzen nimmt diese wieder ab. Eine größere Anzahl an Antennenelementen ergibt einen größeren Bereich von Winkeldifferenzen mit guter Trennbarkeit. **FIG. 3** zeigt eine vergleichbare Auswertung für kreisförmig angeordnete Antennenelemente. **FIG. 4** betrachtet zusätzlich eine "ausgedünnte" Antennenanordnung mit übergroßen Abständen der Elemente im Vergleich zum ULA, erreicht keine perfekte Trennung, aber dafür einen großen Winkeldifferenzbereich mit akzeptabler Trennbarkeit. Als Nachteil des "sparse" Arrays ist dessen doppelte Baugröße zu nennen.

Die Ausgestaltung gemäß der Gleichung (2) entspricht einem räumlichen Bandpassfilter, d.h. die Hauptkeule wird auf die Quelle ausgerichtet. Der Störer wird entsprechend der Winkeldifferenz im Signalraum (= die Winkel der Vertikalen in **FIG. 2** bis **FIG. 4**) gedämpft, das gewünschte Signal bleibt unverändert. Die resultierende Dämpfung zeigt **FIG. 5** über der Einfallswinkeldifferenz. In Summe zeigt das ULA die besten Ergebnisse.

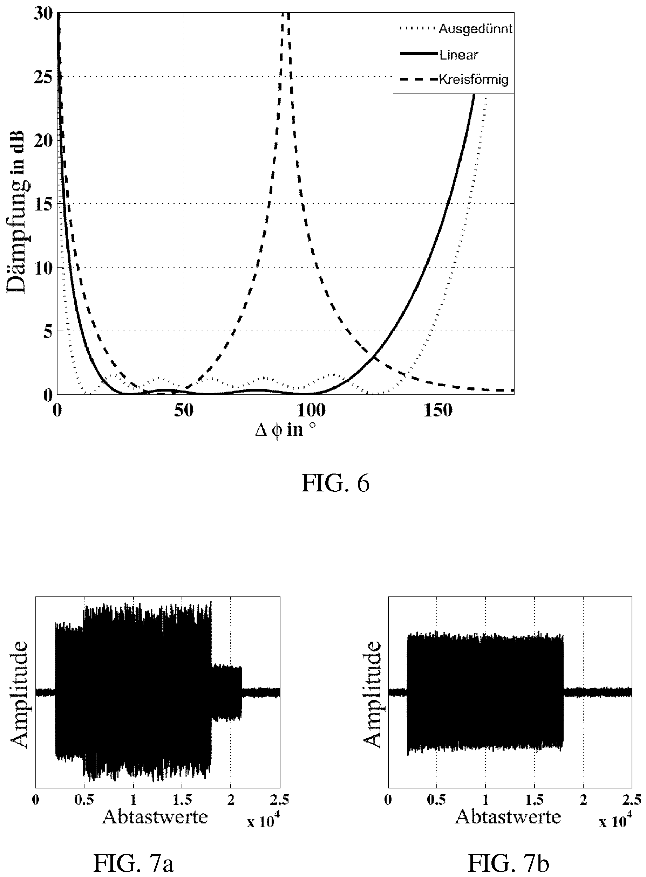

Ein alternativer Ansatz nutzt gemäß Gleichung (6) eine Transformation in einen Unterraum, der orthogonal zum Störer ist

$$X_n = U_n X \quad (6),$$

wobei $U_n$ die Matrix der Eigenvektoren $U$ ohne einen Störsignalvektor ist. Im Unterraum ist dann der Störer komplett unterdrückt (Kerbfilter). Signale mit anderen Winkeln sind gedämpft enthalten, **FIG. 6** zeigt die resultierenden Dämpfungen dieser Signale. Insgesamt lässt sich noch feststellen, dass die Kerbfilterung mehr Potential für eine erfolgreiche Signaltrennung ermöglicht.

Zusammenfassend wird bei der Erfindung eine Selektion der Antennenelemente A1, ..., AN als Kompromiss zwischen weitem Empfangsbereich und hohem Antennengewinn vorgenommen, wobei eine geringere Abdeckung durch mehr Antennen ausgeglichen wird. Dabei können quadratische Patchantennen mit einem Erfassungswinkel von fast 180° und 3dB Gewinn verwendet werden, die als ULA angeordnet sind. Aus den Antennenelementen A1, ..., AN wird parallel die horizontale und vertikale Polarisation ausgekoppelt, was Vorteile bei unbekannter Polarisation der zu empfangenden Signale bietet. Damit kann die Signaltrennung nicht nur nach Einfallswinkel, sondern auch nach Polarisation erfolgen. Beispielsweise können vier aktive Antennenelemente A1, ..., AN jeweils mit horizontaler und vertikaler Polarisation, also insgesamt 8 Empfangskanäle zum Einsatz kommen. Auf beiden Seiten ist jeweils ein inaktives Element zur Harmonisierung der Antennencharakteristiken angebracht. Der räumliche Bandpass kann den Rauschabstand verbessern, erlaubt aber nur eine geringe Signaltrennung. Das Kerbfilter dagegen verändert den Rauschabstand nicht, erlaubt aber hohe Gewinne bei Überlagerungen durch die gute Quellentrennung. Eine Kombination der beiden Methoden ergibt damit optimale Ergebnisse, wobei dieser Effekt in **FIG. 7a, b** aufgezeigt wird. Die Verarbeitungskette ist dabei wie folgt:

- Die digitalisierten Daten werden gefiltert und demoduliert. Die bekannte Präambel von wMBus wurde gesucht und die weitere Verarbeitung darauf synchronisiert.
- Der Dateninhalt des Telegrammheaders wurde decodiert und mittels Fehlererkennungscode (CRC) geprüft.
- Bei fehlerhaften Daten erfolgte die Ausführung einer Signaltrennung, bei der mehrere Kombination räumlicher Filter angewendet werden, bis die Prüfsumme der Daten stimmt oder die Dimensionszahl des Unterraums auf 1 reduziert ist und keine weitere räumliche Filterung erfolgen kann.
- Nach erfolgreicher Decodierung erfolgt eine Kerbfilterung zur Unterdrückung dieses Telegramms und erneute Suche nach einer möglicherweise zuvor versteckten Präambel. Die beschriebene Verarbeitungskette wird dann für dieses Signal nochmal durchgeführt.

Die Erfindung ermöglicht eine signifikante Erhöhung der erkannten Zähler-Adressen je Minute durch Trennung der zahlreichen Überlagerungen; durch Kerbfilter bis zu 74%. Im ländlichen Bereich Erhöhung der korrekten Telegrammanzahl um 48% durch Erhöhung des Rauschabstands durch Bandpassfilter. Die Übertragung auf andere Anwendung im Rahmen der Erfindung ist möglich, da das Prinzip grundsätzlich für viele Funksysteme einsetzbar ist. Insbesondere jedoch dort, wo nur eine unidirektionale Übertragung eingesetzt wird, wie eben bei den extrem stromsparenden, batteriebetriebenen Zählern mit reinem Sendebetrieb, vollständig ohne Empfänger.

**Patentansprüche**

1. Datenerfassungssystem, welches mindestens ein mit einer Antenne verbundenes Funkmodul zur Anbindung mindestens eines mit einem Funksender ausgestatteten Remotemoduls eines Gerätes oder eines Verbrauchszählers über Kurzstreckenfunk aufweist, **dadurch gekennzeichnet, dass** zur sicheren Erfassung von Verbrauchsdaten unter Trennung überlagerter drahtloser Zählertelegramme das Datenerfassungssystem einen Mehrantennen-Datensammler aufweist und die Antenne als Kombination von Antennenelementen (A1, ..., AN) mit horizontaler und/oder vertikaler Polarisation ausgestaltet ist, dass zur Quellentrennung durch Richtungsschätzung und virtuellen Sektorisierung eine Kombination aus Kerb- und räumlichen Bandpassfilter benutzt wird, dass als Kurzstreckenfunk wireless M-BUS und zur Quellentrennung ein Verfahren gemäß "Principal component Analysis (PCA)" benutzt wird und dass der Mehrantennen-Datensammler einen Mehrkanalempfänger mit räumlicher Filterung und Selektion der Antennenelemente (A1, ..., AN), einschließlich paralleler Auskopplung, aufweist.

2. Datenerfassungssystem nach Anspruch 1, **dadurch gekennzeichnet, dass** in einem FPGA oder ASIC des Mehrkanalempfängers die Signaltrennung und die Demodulation der empfangenen Zählertelegramme erfolgt und dass eine CPU diese Telegramme mit den
darin enthaltenen Zählerdaten an eine externe Sammelstelle übermittelt oder diese für eine spätere Übertragung oder Abfrage speichert.

3. Datenerfassungssystem nach Anspruch 1 oder 2, **dadurch gekennzeichnet, dass** als Antenne eine gleichförmige, lineare Antennenanordnung (ULA) mit quadratischen Patchantennen mit einem Erfassungswinkel von fast 180° und 3dB Gewinn benutzt wird.

4. Datenerfassungssystem nach Anspruch 1 oder 2, **dadurch gekennzeichnet, dass** als Antenne eine Antennenanordnung mit kreisförmig angeordneten Antennenelemente (A1, ..., AN) benutzt wird.

**Claims**

1. A data acquisition system, which has at least one radio module connected to an antenna for connecting at least one equipped with a radio transmitter remote module of a device or a consumption meter via short distance radio, **characterized in that** for a secure detection of consumption data with separation superimposed wireless meter telegrams the data acquisition system comprises a multi-antenna data collector and the antenna as a combination of antenna elements (A1,. .., AN) with horizontal and / or vertical polarization, that for source separation by direction estimation and virtual sectorization a combination of notch and spatial bandpass filter is used, that a short-range wireless M-BUS and for source separation a method according to "Principal Component Analysis (PCA)" is used and that the multi-antenna data collector comprises a multi-channel receiver with spatial filtering and selection of the antenna elements (A1,. .., AN), including parallel extraction.

2. Data acquisition system according to claim 1, **characterized in that** in an FPGA or ASIC of that multi-channel receiver, the signal separation and the demodulation of the data to be received is performed and that a CPU transmits these telegrams or the counter data contained therein to an external collection point or stores it for later transfer or query.

3. Data acquisition system according to claim 1 or 2, **characterized in that** the antenna used is a uniform, linear antenna arrangement (ULA) with square patch antennas and with a detection angle of almost 180 ° and 3dB gain.

4. Data acquisition system according to claim 1 or 2, **characterized in that** an antenna arrangement with circularly arranged antenna elements (A1, ..., AN) is used as the antenna.


**Revendications**

1. Un système d'acquisition de données, comportant au moins un module radio connecté à une antenne pour en connecter au moins un équipé d'un module émetteur radio distant d'un dispositif ou d'un compteur de consommation via une radio courte distance, **caractérisé en ce que** pour une détection sécurisée des données de consommation avec des télégrammes de compteur sans fil superposés, le système d'acquisition de données comprend un collecteur de données multi-antennes et l'antenne sous la forme d'une combinaison d'éléments d'antenne (A1,. .., AN) à polarisation horizontale et / ou verticale, **en ce qu'**une combinaison de filtre coupe-bande et spatial coupe-bande est utilisée pour la séparation de source par estimation de la direction et sectorisation virtuelle, **en ce qu'**on utilise un M-BUS sans fil à courte portée et une séparation de source un procédé selon "l'analyse en composantes principales (ACP)" et **en ce que** le collecteur de données multi-antennes comprend un récepteur multicanaux avec filtrage spatial et sélection des éléments d'antenne (A1,. ..,AN), y compris l'extraction parallèle.

2. Le système d'acquisition de données selon la revendication 1, **caractérisé en ce que** dans un FPGA ou un ASIC du récepteur multicanaux la séparation de signal et la démodulation des données à recevoir sont effectués et **en ce qu'**une CPU transmet ces télégrammes ou les données de compteur qui y sont contenues vers un point de collecte externe ou le stocke pour un transfert ou une requête ultérieure.

3. Le système d'acquisition de données selon la revendication 1 ou 2, **caractérisé en ce que** l'antenne utilisée est un agencement d'antenne linéaire uniforme (ULA) avec des antennes carrées avec un angle de détection de presque 180 ° et un gain de 3dB.

4. Le système d'acquisition de données selon la revendication 1 ou 2, **caractérisé en ce qu'**un agencement d'antenne avec des éléments d'antenne (A1, ..., AN) disposés de manière circulaire est utilisé comme antenne.

FIG. 1

FIG. 2

FIG. 3

FIG. 4

FIG. 5

FIG. 6

FIG. 7a

FIG. 7b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10133366 C2
- DE 10133367 C2
- US 20100216412 A1
- EP 1264221 B1
- WO 20100606651 A1

**In der Beschreibung aufgeführte Nicht-Patentliteratur**

- **R. C. QIU ; Z. HU ; Z. CHEN ; N. GUO ; R. RANGANATHAN ; S. HOU ; G. ZHENG.** Cognitive Radio Network for the Smart Grid: Experimental System Architecture, Control Algorithms, Security, and Microgrid Testbed. *IEEE Transactions on Smart Grid,* 2011, vol. 2 (4), 724-740
- **I.T. JOLLIFFE.** Principal Component Analysis. Springer-Verlag New York, Inc, 2002
- **R. C. QIU ; Z. CHEN ; N. GUO ; Y. SONG ; P. ZHANG ; H. LI ; L. LAI.** Towards A Real-time Cognitive Radio Network Testbed: Architecture, Hardware Platform and Application to Smart Grid. *IEEE Workshop on Network Technologies for Software Defined Radio (SDR) Networks,* 2010, 1-6
- **R. RANGANATHAN ; R. QIU ; S. HOU.** Blind Recovery of Smart Meter Wireless Transmissions employing Independent Component Analysis in the presence of Strong Wideband Interference. *Communication Networks for Smart Grid (IEEE SmartGrid-Comm),* 2011, 172-177
- **K. LEE ; C.-B. CHAE ; T.-K. SUNG ; J. KANG.** Cognitive Beamforming Based Smart Metering for Coexistence with Wireless Local Area Networks. *Journal of Communications and Networks,* Dezember 2012, vol. 14 (6), 619-628
- **R. QIU ; Z. HU ; Z. CHEN ; N. GUO ; R. RANGANATHAN ; S. HOU ; G. ZHENG.** Cognitive Radio Network for the Smart Grid: Experimental System Architecture, Control Algorithms, Security, and Microgrid Testbed. *IEEE Transactions on Smart Grid,* 2011, vol. 2 (4), 724-740
- **A. SIKORA ; R. WERNER ; P. LEHMANN ; J.O. GRAFMUELLER.** Design, Implementation and Verification of an Energy Autarkic RF-based Water Meter with Energy Aware Routing. *Proceedings of Energy selfsufficient sensors,* 2014, 1-5
- **C. RECK ; U. BEROLD ; L.-P. SCHMIDT.** Detection of SSR signals in multipath airport enviroments by a multichannel receiver. *Asia-Pacific Microwave Conference (APMC) Proceedings,* 2010, 1685-1688